(19) Europäisches Patentamt
European Patent Office
Office européen des brevets

(11) **EP 3 387 384 B1**

(12) **EUROPEAN PATENT SPECIFICATION**

(45) Date of publication and mention
of the grant of the patent:
**30.11.2022 Bulletin 2022/48**

(21) Application number: **16874059.5**

(22) Date of filing: **12.12.2016**

(51) International Patent Classification (IPC):
**G01C 21/00** *(2006.01)*      **G01C 21/34** *(2006.01)*

(52) Cooperative Patent Classification (CPC):
**G01C 21/3484; G01C 21/3461; G01C 21/3492**

(86) International application number:
**PCT/US2016/066198**

(87) International publication number:
**WO 2017/100780 (15.06.2017 Gazette 2017/24)**

(54) **INTERACTIVE TELEMATICS SYSTEM**

INTERAKTIVES TELEMATIKSYSTEM

SYSTÈME TÉLÉMATIQUE INTERACTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2015  US 201562266420 P**

(43) Date of publication of application:
**17.10.2018  Bulletin 2018/42**

(73) Proprietor: **Locator IP, LP
State College, PA 16803 (US)**

(72) Inventors:
 • **MYERS, Joel N.**
   **State College,Pennsylvania 16803 (US)**
 • **MCGEEVER, Casey**
   **State College, Pennsylvania 16803 (US)**
 • **PORTER, Jonathan**
   **State College, Pennsylvania 16803 (US)**
 • **ROOT, Michael R.**
   **Edmond, Oklahoma 73034 (US)**
 • **SMITH, Michael**
   **Wichita, Kansas 67202 (US)**
 • **STEINBERG, Michael A.**
   **State College, Pennsylvania 16803 (US)**
 • **LEBLANC, André**
   **Montréal, Québec H3A 1P8 (CA)**

(74) Representative: **Carroll, Christopher P.
Burns & Levinson London LLP
4-12 Regent Street, 4th Floor
London SW1Y 4PE (GB)**

(56) References cited:
**US-A1- 2009 048 775     US-A1- 2012 173 075
US-A1- 2013 080 055     US-A1- 2013 080 055
US-A1- 2014 358 437**

**Description**

CROSS REFERENCE TO RELATED APPLICATIONS

This application claims priority to U.S. Provisional Patent Application No. 62/266,420, filed December 11, 2015.

BACKGROUND

Existing mapping systems allow a driver to select a fastest or shortest route or one that avoids tolls or highways. Existing mapping systems, however, do not identify an optimum route based a user's unique personality and preferences (or the unique attributes or limitations of the user's vehicle). Some individuals may prefer to travel on roadways with lower speed limits, such as a teenage female with a limited driving history, a user with a history of traffic tickets, a user with limited insurance coverage, a user who typically travels with an infant, etc. Other users may seek out roadways with multiple lanes that are in good condition to allow for travel at higher speeds, such as an older male driver, an experienced driver who often drives an expensive, all-wheel-drive car, etc. Meanwhile, the preferred routes of each user may change depending on the dynamically changing road conditions and/or weather conditions.

Additionally, certain roadways may be closed to certain vehicle types (e.g., trucks) or vehicles over a certain weight or may include highway overpasses that are too low for vehicles over a certain height.

US 2009/048775 A1 discloses a route searching method which allows drivers having mutually similar travelling purposes and preferences to find highly convenient routes by sharing their route searching know-how. A center apparatus collects probe data received from an in-vehicle terminal apparatus. A preference parameter creating unit calculates, based on the probe data, road usage frequencies according to preference items such as vehicle type, driver age and gender, and travel purpose which can be factors for route selection and stores the calculated road usage frequencies as preference parameters in a preference parameter database. A route searching unit included in the in-vehicle terminal apparatus requests the center apparatus to transmit a preference parameter similar to user attribute information, adjusts link costs according to the preference parameter received from the center apparatus, and determines a minimum-cost route to a destination.

US 2014/358437 A1 discloses observing, via location information generated or obtained through a user's mobile electronic device, a user traverse a preferred user route from a start location to a destination, and saving the preferred user route in relation to the user. The method may predict, based on past behavioural information for the user, a predicted start time of a future trip to the destination and may identify one or more routes from the start location to the destination. In addition, the method may compare, at a time relative to the predicted start time of the future trip, a duration or distance associated with traversing the preferred user route to a duration or distance associated with traversing the fastest route or the shortest route from the start location to the destination.

US 2013/080055 A1 discloses receiving a safety preference of a user; calculating a temporary route to a destination indicated by the user; analysing a portion of the temporary route to determine whether the portion is sufficiently safe based on the safety preference; modifying the portion of the temporary route when the portion is not sufficiently safe; and presenting the temporary route to the user.

Accordingly, there is a need for a system that identifies the optimum routes for a user based on the user's unique preferences while accounting for the dynamically changing road conditions and the current and/or forecasted weather conditions. Additionally, there is a need for the system to identify those optimum routes based on the unique attributes or limitations of the user's vehicle.

SUMMARY

In order to overcome those and other drawbacks in the prior art, there is provided an interactive telematics system that identifies one or more optimum routes for a user by identifying a plurality of potential routes from a departure location to a destination, calculating attributes of each of the potential routes, comparing the attributes of each of the potential routes to user preferences in a user profile associated with the user, identifying one or more optimized routes for the user by selecting one or more of the potential routes based on the comparison of the attributes of each of the potential routes to the user preferences associated with the user, and outputting the one or more optimized routes to a communications network for transmittal to a remote device associated with the user.

BRIEF DESCRIPTION OF THE DRAWINGS

Aspects of exemplary embodiments may be better understood with reference to the accompanying drawings. The components in the drawings are not necessarily to scale, emphasis instead being placed upon illustrating the principles of exemplary embodiments, wherein:

FIG. 1 is a diagram illustrating an architecture of an interactive telematics system according to an exemplary embodiment of the present invention;

FIG. 2 is a block diagram illustrating the interactive telematics system according to an exemplary embodiment of the present invention;

FIG. 3 is a drawing illustrating three potential routes from a departure location to a destination location;

FIG. 4 is a drawing illustrating a fourth potential route from the departure location to the destination location;

FIG. 5 is a flowchart illustrating a process for determining one or more optimized routes for a user and outputting those routes to the user according to an exemplary embodiment of the present invention;

FIG. 6 is a flowchart illustrating a process for updating a user profile according to an exemplary embodiment of the present invention; and

FIG. 7 is a flowchart illustrating a process for updating correlations used to calculate the attributes of potential routes according to an exemplary embodiment of the present invention.

DETAILED DESCRIPTION

Reference to the drawings illustrating various views of exemplary embodiments of the present invention is now made. In the drawings and the description of the drawings herein, certain terminology is used for convenience only and is not to be taken as limiting the embodiments of the present invention. Furthermore, in the drawings and the description below, like numerals indicate like elements throughout.

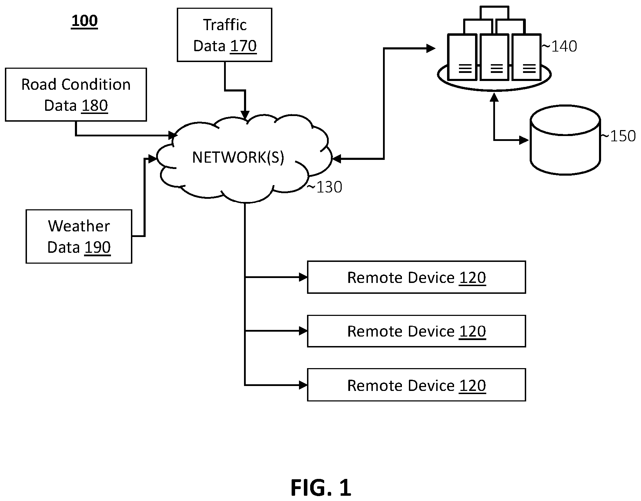

FIG. 1 is a diagram illustrating an architecture 100 of an interactive telematics system according to an exemplary embodiment of the present invention.

As shown in FIG. 1, the architecture 100 includes remote devices 120 that communicate with one or more servers 140 and one or more storage devices 150 via one or more networks 130. As described in detail below, the system is configured to output telematics information to the remote devices 120.

The remote devices 120 include any suitable computing device configured to receive information from the one or more servers 140 via the one or more networks 130. Remote devices may include, for example, smartphones, desktop computers, notebook computers, in-vehicle navigation devices, stand-alone navigation devices, etc. Each remote device 120 may include one or more processors (*e.g.*, a central processing unit, a graphics processing unit, etc.), one or more storage devices (*e.g.*, random access memory, read-only memory, solid state memory, a hard disk, etc.) as well as at least one input device (*e.g.,* a keyboard, a mouse, etc.) and output device (*e.g.,* a display) or an input-output device (*e.g.,* a touchscreen). The remote devices 120 and/or the network(s) 130 may determine the real-time locations of at least some of the remote devices 120, for example using the Global Positioning System (GPS), network identification, cellular network triangulation, etc.

The one or more servers 140 may include any suitable computing device that executes instructions to perform the functions described herein. The one or more servers 140 may include internal storage and one or more computer processors. The one or more storage devices 150 may also include a non-transitory computer readable storage medium, such as a hard disk, solid-state memory, etc. The network(s) 130 may include one or more short- or long-range data connections that enable the one or more servers 140 to output information for transmittal to (and receive information from) the remove devices 120. The data connections may include wired and/or wireless data connections. The network(s) 130 may include one or more local area networks or wide area networks (*e.g.*, cellular networks, the internet).

In order to perform the functions described herein, the one or more servers 140 may receive information from third party sources.

The one or more servers 140 may receive past and current traffic data 170. Past traffic data 170 may be received, for example, from (federal, state, and/or local) government entities, automobile associations (*e.g.*, the American Automobile Associations), etc. Current traffic data 170 may be received, for example, from government entities, private traffic management organizations, etc.

The one or more servers 140 may receive static and/or dynamic road condition data 180. Road condition data may be received, for example, from government agencies (*e.g.*, federal, state, and local departments of transportation, topographical information from the U.S. Geological Survey, etc.), private traffic management organizations, etc.

The one or more servers 140 may receive current, historical, and forecasted weather data 190. The weather data 190 may be received from third parties such as AccuWeather Enterprise Solutions, Inc., governmental agencies (*e.g.*, the U.S. Environmental Protection Agency (EPA), the National Weather Service (NWS), the National Hurricane Center (NHC), Environment Canada, the U.K. Meteorologic Service, the Japan Meteorological Agency, etc.), other private companies (*e.g*., Vaisalia's U.S. National Lightning Detection Network, Weather Decision Technologies, Inc.), individuals (e.g., members of the Spotter Network), etc.

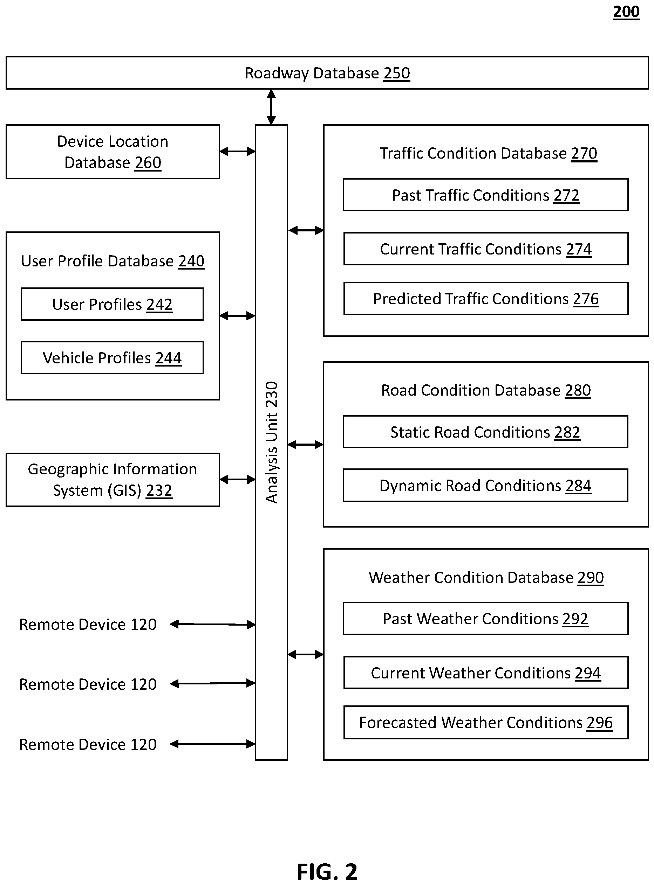

FIG. 2 is a block diagram illustrating the interactive telematics system 200 according to an exemplary embodiment of the present invention.

As shown in FIG. 2, the interactive telematics system 200 includes an analysis unit 230 and a geographic information system (GIS) 232, a user profile database 240, a roadway database 250, and a device location database 260. The interactive telematics system 200 also includes a traffic database 270, and a weather condition database 290, and may include a road condition database 280. The user profile database 240 includes user profiles 242 and may also include vehicle profiles 244. The traffic condition database 270 includes past traffic conditions 272 and current traffic conditions 274. The traffic condition database 270 may also include predicted traffic conditions 276 determined by the interactive telematics system 200. The road condition database 280 includes static road conditions 282 and may also include dynamic road conditions 284. The weather condition database 290 includes past weather conditions 292, current weather conditions 294, and forecasted weather conditions 296.

The analysis unit 230 may include any suitable computing device and/or computer executable software instructions that perform the functions described herein. The analysis unit 230 may be realized by hardware elements, such as the one or more servers 140, and/or software instructions accessible to and executed by the one or more servers 140.

The geographic information system (GIS) 232 may be any suitable computing device and/or computer executable software instructions designed to capture, store, manipulate, analyze, manage, and/or present geographical data. (Geographic information systems are sometimes referred to as geographical information systems.) The GIS 232 may be realized by specialpurpose hardware and/or software instructions executed by the one or more servers 140. Additionally or alternatively, the interactive telematics system 200 may use a third party GIS, such as Google maps, Ersi, etc.

The user profile database 240, the roadway database 250, the device location database 260, the traffic condition database 270, the road condition database 280, and the weather condition database 290 may be any organized collection of information, whether stored on a single tangible device or multiple tangible devices. The user profile database 240, the roadway database 250, the device location database 260, the traffic condition database 270, the road condition database 280, and the weather condition database 290 may be stored, for example, in one or more of the storage devices 150.

The user profile database 240 stores a plurality of user profiles 242, each user profile 242 including information used by the interactive telematics system 200 to determine the user's preferred driving behavior and/or preferred routes. Each user profile 242 may include, for example, demographic information such as age and sex, known medical conditions, level of driving experience, behavior type, risk adversity, tendencies and preferences with such things as cruising speed, responses to various traffic conditions, and reactions to adverse and potentially dangerous driving conditions, the usual co-occupants with the driver *(e.g.,* if the user drives alone, with small children, elderly people, people with known medical conditions, etc.), driving record, current type of insurance coverage, and other factors determined by the interactive telematics system 200 as relevant to the user's preferred driving behavior and preferred routes. Each user profile 242 may include information received directly from the user and/or information determined by the interactive telematics system 200 *(e.g.,* based on the user's driving behavior as inferred by the real-time location of the user's remote device 120).

The user profile database 240 may also store a plurality of vehicle profiles 244 associated with vehicles used by users of the interactive telematics system 200. Each vehicle profile 244 may include information used by the interactive telematics system 200 to determine the user's preferred driving behavior and/or preferred routes when driving the vehicle associated with the vehicle profile 244. Each vehicle profile 244 may include attributes of the vehicle associated with the vehicle profile 244, such as vehicle height, vehicle type (*e.g.,* sedan, convertible, truck, etc.), vehicle fuel requirements (*e.g*. diesel and diesel grade, gasoline and gasoline grade, liquefied natural gas, etc.), vehicle age, vehicle weight, vehicle transmission type (automatic, manual), vehicle drivetrain (*e.g*., two-wheel drive, four-wheel drive, all-wheel drive, etc.), vehicle service/maintenance history, required vehicle maintenance (*e.g*., information relating to the vehicle's known problems), etc. The vehicle profiles 244 may be determined based on information from users. For example, a user may contribute information for use in vehicle profile 244 by answering questions posed by the interactive telematics system 200 via a mobile phone application, an online form, etc. A user may input information regarding one or more vehicles that are used by another user (or multiple users) in the same household.

The roadway database 250 includes a dataset of current roadways, including available opportunities for adjusting traffic flow (*e.g*., parallel access roads, passing lanes, on- and offramps, etc.). The dataset of current roadways may be received from government agencies, private traffic management organizations, etc.

The device location database 260 includes information indicative of the real-time locations of at least some of the remote devices 120. Real-time locations of remote devices 120 may be determined by the remote devices and/or the network(s) 130, for example using the Global Positioning System (GPS), network identification, cellular network triangulation, etc. Additionally, the device location database 260 may be automatically and/or repeatedly updated to include information indicative of the real-time (or near real-time) dynamic location of at least some of the remote devices 120.

The traffic condition database 270 includes information regarding past traffic conditions 272 and current traffic conditions 274. The traffic conditions 272 and 274 may include, for example, the speed and volume of traffic at points and/or segments of the roadways included in the roadway database 250, the composition of that traffic (e.g., long haul tractor trailers, passenger vehicles, pick-up trucks pulling trailers, motorcycles, etc.), collision locations, the nature and severity of those collisions, etc. Each data point regarding the traffic conditions 272 and 274 is stored with the date and time of that data point. The past and current traffic conditions 272 and 274 may be determined based on information from third party sources (e.g., the traffic data 170 described above) and/or determined by the interactive telematics system 200 based on the real-time locations of the remote devices 120 (e.g., the speed of the remote device 120, whether the remote device 120 is stopping frequently, etc.). As described in detail below, the interactive telematics system 200 may also use the past traffic conditions 272 and the current traffic conditions 274 (as well as additional information) to determine and store predicted traffic conditions 276, including estimated likelihoods of collisions, and store the predicted traffic conditions 276 in the traffic condition database 270.

The road condition database 280 includes static road conditions 282 for segments of the roadways included in the roadway database 250. The static road conditions 282 may include, for example, the applicable traffic laws (e.g., speed limit, permitted vehicle types, etc.), roadway types (e.g., a multi-lane interstate highway, a two-lane roadway, one-lane county roadway, etc.), overpass heights, location (e.g., desert, mountains, suburban, urban, etc.), surface composition (e.g., asphalt, concrete, gravel composite, etc.), the amount of illumination at night, etc. The static road conditions 282 may be determined by the interactive telematics system 200 based on information received from third party sources (e.g., the road condition data 180 described above) and/or feedback from users.

The road condition database 280 may also include dynamic road conditions 284 for segments of the roadways included in the roadway database 250. The dynamic road conditions 284 may include, for example, surface conditions (e.g., wet, snow-covered, icy, dry, etc.), surface temperature, surface maintenance conditions (e.g., properly maintained or in poor repair), construction activity (e.g., locations and nature of construction activities), time periods during which roadways or segments of roadways are closed (e.g., for recreation), etc. The interactive telematics system 200 may determine the dynamic road conditions 284 based on information received from sensors (e.g., weather and/or environmental sensors), information received from third party sources (e.g., the road condition data 180 and/or the weather data 190 described above), feedback from users, etc. Data points regarding dynamic road conditions 284 may be stored with the date of that data point. Additionally, data points regarding dynamic road conditions 284 may be stored with the time of that data point (for example, if a dynamic road condition 284 is not applicable for an entire day).

The weather condition database 290 includes any information regarding any atmospheric, environmental, geographic, and/or geological condition that may have affected past traffic conditions 272, may be affecting current traffic conditions 274, or may affect future traffic conditions, including past weather conditions 292, current weather conditions 294, and forecasted weather conditions 296. Weather conditions may include weather parameters such as temperature, precipitation, visibility, wind speed and direction, etc. The forecasted weather conditions 296 may be determined by the interactive telematics system 200 or received from a weather forecasting system or third party. The forecasted weather conditions 296 may be location-specific, minute-by-minute forecasts generated using AccuWeather's MinuteCast system. (MINUTECAST is a registered service mark of AccuWeather, Inc.) Additionally, the weather condition database 290 may include geographical conditions (e.g., the potential for glare along projected routes), environmental conditions (e.g., the known habitats or projected travel paths of animals such as birds), geological conditions (e.g., past locations and potential future locations of earthquakes), etc.

The current traffic conditions 274, the dynamic road conditions 284, and/or the current weather conditions 294 may also be determined based on information received from remote devices 120, vehicles, and/or individuals. In one example, the interactive telematics system 200 may receive and interpret point observations from individuals, such as images and/or descriptions, and incorporate information from those point observations (as well as the location of the user) when determining the current traffic conditions 274, the dynamic road conditions 284, and/or the current weather conditions 294. The point observations may be output by users for transmittal to the interactive telematics system 200 (for example, using a graphical user interface of a remote device 120). Additionally or alternatively, the interactive telematics system 200 may gather point observations from social media, other publicly-available sources, and/or private third-party sources. In another example, the interactive telematics system 200 may receive and interpret information from vehicles and incorporate that information (as well as the location of the vehicle) when determining the current traffic conditions 274, the dynamic road conditions 284, and/or the current weather conditions 294. The information from vehicles may include sensor data from vehicle weather sensors (e.g., outside temperature and rain sensors), sensor data from vehicle weather road condition sensors (e.g., sensors used by a vehicle anti-lock braking system to determine wet or snow-covered roads or vehicle traction), sensor data from other vehicle sensors (e.g., cameras), information indicating that the vehicle lights are on during the day (indicating reduced visibility), information that vehicle windshield wipers are on (indicating rain), etc. The information from vehicles may be output to the interactive telematics system 200 via an in-vehicle remote device 120, a remote device 120 that is paired with the vehicle (e.g., via Bluetooth), etc.

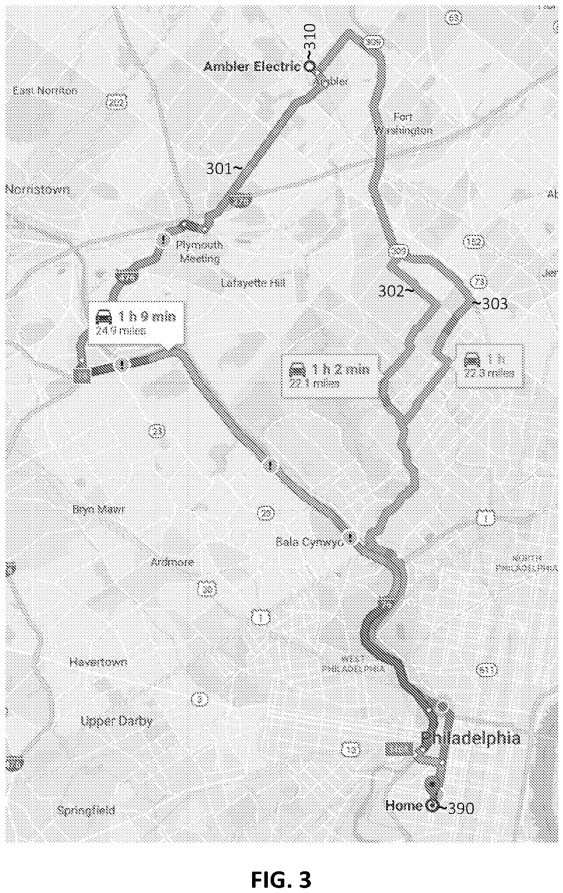

The interactive telematics system 200 determines optimized driving routes for a user based on characteristics of that user stored in a user profile for that user. The system will be described with reference to the three routes illustrated in FIG. 3.

FIG. 3 illustrates three potential routes from a departure location 310 to a destination location 390, including route 301, route 302, and route 303. Each of the routes 301, 302, and 303 are determined by the analysis unit 230 based on information stored in the roadway database 250 using the GIS 232.

As shown in FIG. 3, route 301 is 24.9 miles in length with an estimated travel time (determined by the analysis unit 230 as described below) of 1 hour, 9 minutes. Route 302 is 22.1 miles in length with an estimated travel time of 1 hour, 2 minutes. Route 303 is 22.3 miles in length with an estimated travel time of 1 hour. In addition to length $l$ and estimated travel time t, the interactive telematics system 200 determines other attributes of each potential route, including, for example, the potential safety risk of traveling on each route (or, inversely, the safety s) and other factors of the driving experience along each route, such as potential congestion $c$, whether the route is scenic (scenery $p$), whether the route is well lit at night (brightness $b$), etc. For example, the analysis unit 230 may reduce each of those attributes to a numerical value as shown in Table 1:

Table 1

| Route | 301 | 302 | 303 | $n$ |
|---|---|---|---|---|
| Length | $l_{301}$ | $l_{301}$ | $l_{301}$ | $l_n$ |
| Travel time | $t_{301}$ | $t_{301}$ | $t_{301}$ | $t_n$ |
| Safety | $s_{301}$ | $s_{301}$ | $s_{301}$ | $s_n$ |
| Brightness | $b_{301}$ | $b_{301}$ | $b_{301}$ | $b_n$ |
| Congestion | $c_{301}$ | $c_{301}$ | $c_{301}$ | $c_n$ |
| Scenery | $p_{301}$ | $p_{301}$ | $p_{301}$ | $p_n$ |
| ... | ... | ... | ... | ... |
| ... | ... | ... | ... | ... |

Whether a particular route n is appealing to a particular user can then be expressed mathematically as $X_n$, as shown in Equation 1:

$$X_n = Al_n + Bt_n + Cs_n + Db_n + Ec_n + Fp_n \ldots$$

where *A, B,* C, *D, E, F,* etc. are coefficients representing the user preferences for each attribute relative to the other attributes. In other words, the ratio *B: A* represents how much the user weighs estimated travel time $t_n$ versus distance $l_n$ when determining an optimum driving route. Similarly, the ratio *B: C* represents how much the user weighs estimated travel time $t_n$ versus safety $s_n$ *(i.e.,* the user's risk aversion), the ratio *B: D* represents how much the user weighs estimated travel time $t_n$ versus traveling on roads that are well lit (with a high $b_n$), the ratio *B: E* represents how much the user weighs estimated travel time $t_n$ versus congestion $c_n$ *(e.g.,* how much the user would prefer a longer drive where he or she keeps moving to a shorter one in traffic), the ratio *B: F* how much the user weighs estimated travel time $t_n$ versus scenery $p_n$ (*e.g.,* whether and by how much the user would prefer a longer drive with a nice view), etc.

The analysis unit 230 determines each attribute $l_n$, $c_n$, etc. for each potential route. Because some of the attributes may vary over time, the interactive telematics system 200 may provide functionality for the user to specify a departure time (or alternatively an estimated arrival time) via a graphical user interface using a remote device 120. Of course, the interactive telematics system 200 may use the current time as the default departure time.

To determine the distance $l_n$ of each route, the analysis unit 230 simply plots the route from the departure location 310 to the destination location 390 and measures the linear length of the route using the GIS 232.

If the departure time is the current time, the analysis unit 230 determines potential congestion $c_n$ largely based on the current traffic conditions 274. However, because congestion may vary during the time it takes for the user to travel along the route, the analysis unit 230 may additionally determine potential congestion $c_n$ based on past traffic conditions 272 along the route at similar times of day, during similar days of the week, on similar days of the year (*e.g.,* holiday or non-holiday), when the past weather conditions 292 were similar to the current weather conditions 294 and/or forecasted weather conditions 294 (depending on when the user is expected to be traveling along that portion of the route), when the dynamic road conditions 284 were similar to the current dynamic road conditions 284, etc. Additionally, the analysis unit 230 may determine potential congestion $c_n$ based on the past traffic conditions 272 of other similar roadways (i.e., roadways with similar static road conditions 282) at similar times of day, during similar days of the week, on similar days of the year (e.g., holiday or non-holiday), when the past weather conditions 292 were similar to the current weather conditions 294 and/or forecasted weather conditions 294 (depending on when the user is expected to be traveling along that portion of the route), when the dynamic road conditions 284 were similar to the current dynamic road conditions 284, etc.

The analysis unit 230 determines the estimated travel time $t_n$ based on the length of the route and an estimated driving speed of the vehicle, which is the inversely proportional to the potential congestion $c_n$ determined by the analysis unit 230 as described above.

Similar to the potential congestion $c_n$ determination, the analysis unit 230 also determines the safety $s_n$ of each route based on past traffic conditions 272. In this instance, however, the analysis unit 230 determines the safety $s_n$ of the route based on past collisions along the route (a subset of the past traffic conditions 272). Past collisions may be given more weight if they were, for example, during similar times of day, during similar days of the week, on similar days of the year (e.g., holiday or non-holiday), when the past weather conditions 292 were similar to the current weather conditions 294 and/or forecasted weather conditions 294 (depending on when the user is expected to be traveling along that portion of the route), when the dynamic road conditions 284 were similar to the current dynamic road conditions 284, etc. Additionally, in an embodiment not forming part of the invention, the analysis unit 230 may further determine the safety $s_n$ of the route based on past collisions along similar roadways (i.e., roadways with similar static road conditions 282) at similar times of day, during similar days of the week, on similar days of the year (e.g., holiday or non-holiday), when the past weather conditions 292 were similar to the current weather conditions 294 and/or forecasted weather conditions 294 (depending on when the user is expected to be traveling along that portion of the route), when the dynamic road conditions 284 were similar to the current dynamic road conditions 284, etc.

Each time the analysis unit 230 determines the potential congestion $c_n$, the estimated travel time $t_n$, and the safety $s_n$ of each route, the analysis unit 230 may store those calculations as predicted traffic conditions 276. After the time period for those calculations, the analysis unit 230 may compare those predicted traffic conditions 276 to the actual traffic conditions (i.e., the current traffic conditions 274 or the past traffic conditions 272, depending on when the comparison takes place) and the actual travel times for users along that route. Depending on the accuracy of the calculations, the analysis unit 230 can further refine the correlations used to make those calculations.

The analysis unit 230 may determine how scenic (i.e., scenery $p_n$) and/or how well lit (i.e., brightness $b_n$) the route is based on the static road conditions 282 for each portion of the route. Because scenery $p_n$ may only be relevant during the day and brightness $b_n$ is only relevant at night, the analysis unit 230 may vary those factors based on time of day. Alternatively, the analysis unit 230 may vary user preferences regarding those attributes (e.g., the coefficients $D$ and $E$) based on time of day.

The user preferences used by the analysis unit 230 to determine the user's preferred driving behavior and/or preferred routes (for example, information used to determine the coefficients $A, B, C, D, E, F$, etc. and/or the ratios $B: A, B: C, B: D, B: E, B: F$, etc., as described above) are stored in a user profile 242 associated with the user. The analysis unit 230 may determine those user preferences, for example, based on information received directly from the user (e.g., by providing functionality for the user to input information via a graphical user interface provided by the via a graphical user interface using a remote device 120). For example, the graphical user interface may ask the user direct questions about the user's preference for scenery $p_n$ and/or safety $s_n$ relative to trip length $l_n$, whether the user prefers well lit roads (i.e., low brightness $b_n$) at night, whether the user prefers well lit roads at night when it is raining, etc.

Additionally, the user profile 242 may store information that is directly applicable to certain routes. Referring back to FIG. 3, for example, a parent may not permit a new driver to travel along a portion of route 301. Accordingly, the interactive telematics system 200 may provide functionality for the user (e.g., the new driver) or another user (e.g., the parent) to specify that certain roadways or portions of roadways are to be avoided. Accordingly, the analysis unit 230 will output only routes that avoid those roadways.

Additionally, in the course of providing optimized routes for the user, the analysis unit 230 may present the user with more multiple route options (for example, as shown in FIG. 3), allow the user to select one of the routes, and infer from the user selection that the user prefers the attributes of the selected route relative to the attributes of the routes that the user chose not to select. Additionally, because the analysis unit 230 has access to information indicative of the real-time location of the remote device 120 associated with the user (as stored in the device location database 260), the analysis unit 230 may infer that the user prefers the attributes of the routes that the user chooses to follow, even if the user chooses to drive along a route without requesting an optimized route from the interactive telematics system 200, chooses to deviate from a route suggested by the interactive telematics system 200, etc.

Additionally, the analysis unit 230 may infer that the user has similar user preferences as other users with similar user profile criteria as the user profile criteria stored in the user profile 242 associated with the user, such as age, sex, medical condition(s), driving experience, driving record, insurance, usual co-occupant(s) (e.g., children, elderly people, people with medical conditions, etc.), and/or similar vehicle profile criteria as the vehicle profile criteria stored in the vehicle profile 242 associated with the user's vehicle, such as vehicle type (*e.g.,* sedan, convertible, truck, etc.), vehicle fuel requirements (*e.g.,* diesel and diesel grade, gasoline and gasoline grade, liquefied natural gas, etc.), vehicle age, vehicle weight, vehicle transmission type (automatic, manual), vehicle drivetrain (*e.g.,* two-wheel drive, four-wheel drive, all-wheel drive, etc.), vehicle service/maintenance history, and/or required vehicle maintenance (*e.g.,* information relating to the vehicle's known problems).

The user's preferred driving behavior and/or preferred routes may vary for different types of trips. For example, the user may prefer routes with more scenery $p_n$ for trips of longer lengths (*i.e.,* higher $l_n$). In another example, user safer routes (*i.e.,* higher safety $s_n$), routes with fewer highways, and/or routes with lower speed limits when the user is driving a specific vehicle, etc. Accordingly, the analysis unit 230 may determine specific user preferences for certain types of trips - for example, by asking the user specific questions about user preferences for certain types of trips, inferring those specific preferences based on user-selected routes and/or user-driven routes for certain types of trips, etc. - and determine optimized routes for those types of trips based on those specific preferences.

The user's preferred driving behavior and/or preferred routes may vary based on adverse weather conditions. For example, a user may prefer safer routes (*i.e.,* higher safety $s_n$), routes with fewer highways, and/or routes with lower speed limits when the current weather conditions 294 and/or forecasted weather conditions 296 show that the user will be driving in adverse weather conditions. A user's specific preferences may even vary based on a specific weather condition. For example, a user may prefer routes with higher brightness $b_n$ when the current weather conditions 294 and/or forecasted weather conditions 296 show that the user will be driving in the rain. Accordingly, the analysis unit 230 may determine specific user preferences for trips during adverse weather conditions - for example, by asking the user specific questions about user preferences for during adverse weather conditions, inferring those specific preferences based on user-selected routes and/or user-driven routes during adverse weather conditions, etc. - and determine optimized routes for trips during adverse weather conditions.

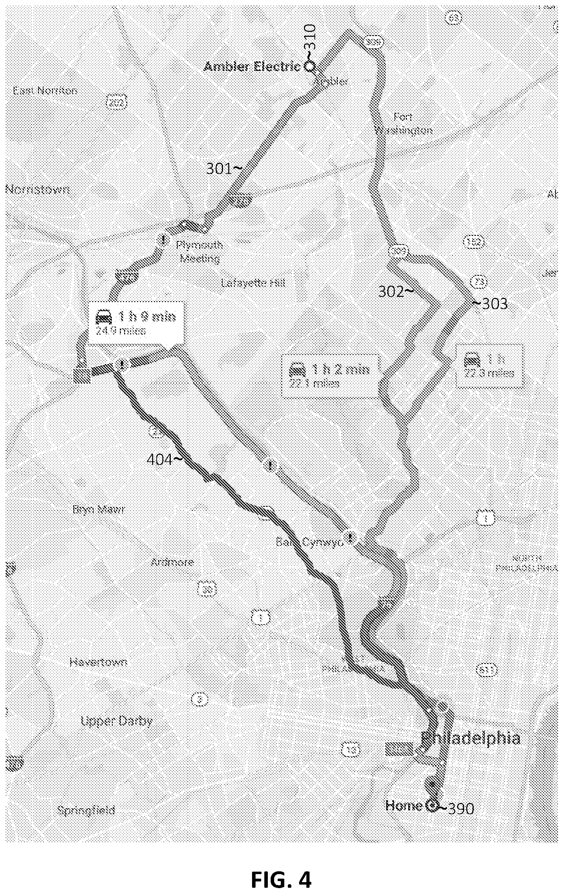

The analysis unit 230 may also learn new routes that the user prefers based on the real-time locations of the remote device 120 associated with the user. As shown, for example, in FIG. 4, the user may select route 301 when leaving the departure location 310 then later decide to deviate from route 301 and instead follow route 404 (despite the fact that the interactive telematics system 200 did not present route 404). Later, if the user is making a similar trip and route 301 is presented as an option, the analysis unit 230 may also present route 404 as an option along with, for example, the estimated travel times $t_{301}$ and $t_{404}$, so that the user may make a more informed decision of whether to follow route 301 or, once again, choose route 404.

The analysis unit 230 may also determine optimized routes directly from vehicle profile criteria stored in the vehicle profile 242 associated with the user's vehicle. As shown in FIGS. 3 and 4, for example, a portion of route 302 may be closed to certain vehicle types (*e.g.,* trucks) and/or vehicles over a certain weight. In another example, the route 301 may include a highway overpass that is too low for vehicles over a certain height. Accordingly, the analysis unit 230 may be configured to suggest alternate routes and avoid roadways that are inaccessible to vehicles with certain vehicle profile criteria.

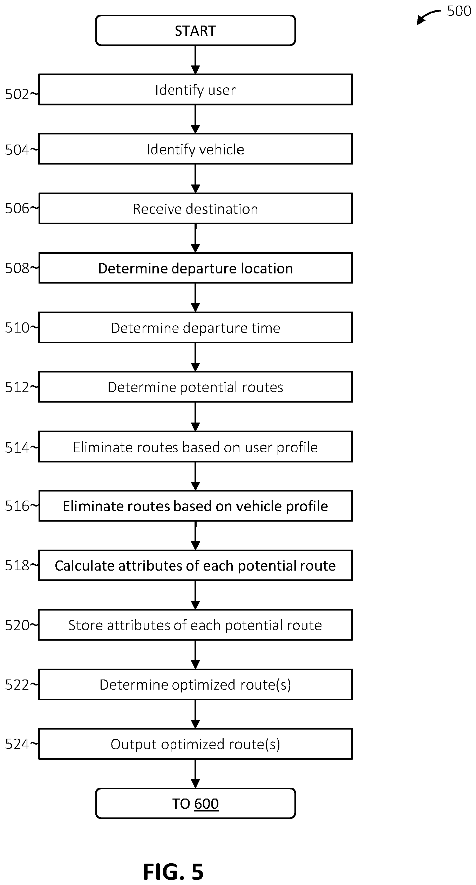

FIG. 5 is a flowchart illustrating a process 500 for determining one or more optimized routes for a user and outputting those routes to the user according to an exemplary embodiment of the present invention.

The user (and the associated user profile 242) is identified in step 502. If the remote device 120 is a personal device, such as a smartphone, the analysis unit 230 identifies the user based on the user associated with the smart device 120. For example, the user profile 242 associated with the user may include a device identifier code associated with the remote device 120. In some instances, however, the remote device 120 may be used by multiple users (*e.g.,* an in-car or stand-alone navigation system). In those instances, the interactive telematics system 200 may provide functionality for the user to identify the user using a graphical user interface of the remote device 120.

In some embodiments, the vehicle (and an associated vehicle profile 244) may be identified in step 504. For example, if the remote device 120 is an in-car navigation system, the remote device 120 may be associated with a vehicle profile 244 associated with the vehicle. In other instances, the interactive telematics system 200 may provide functionality for the user to identify the vehicle by selecting one of the user's vehicles using a graphical user interface of the remote device 120.

A destination is received from the user in step 506, for example, by providing functionality for the user to select a destination using a graphical user interface of the remote device 120.

A departure location is determined in step 508. If the user is using a location-aware remote device 120, the interactive telematics system 200 may use the current location of the remote device 120 as the default departure location. Additionally, however, the interactive telematics system 200 may provide functionality for the user to identify a different departure location using a graphical user interface of the remote device 120.

A departure time is determined in step 510. The interactive telematics system 200 may use the current time as the default departure time. Additionally, however, the interactive telematics system 200 may provide functionality for the user to identify a different departure time or a destination time using the remote device 120 (for example, by making a selection via a graphical user interface).

Potential routes from the departure location to the destination location are determined in step 512. The interactive telematics system 200 may determine any number of potential routes using the GIS 232 and information stored in the roadway database 250.

One or more of the potential routes may be eliminated based on information stored in the user profile 242 in step 514. As described above, for example, the user profile 242 may indicate that the user prefers not to (or is not allowed to) travel along certain roadways or portions of roadways. Accordingly, the interactive telematics system 200 may eliminate the routes that include the roadways or portions of roadways that the user prefers to or must avoid.

One or more of the potential routes may be eliminated based on information stored in the vehicle profile 244 in step 516. As described above, for example, the vehicle profile 244 may indicate that the vehicle is prohibited from traveling along certain roadways or portions of roadways. Accordingly, the interactive telematics system 200 may eliminate the routes that include those roadways or portions of roadways.

Attributes of each route *(e.g.,* length *l,* estimated travel time *t,* safety *s,* potential congestion c, scenery *p,* brightness *b,* etc.) are calculated in step 518 as described above.

Some of the attributes of each route (e.g., congestion c, safety s, estimated travel time t, etc.) may be stored as predicted traffic conditions 276 in step 520.

The interactive telematics system 200 determines one or more optimized routes in step 522. The one or more optimized routes are determined by comparing the attributes of each potential route calculated in step 518 with user preferences stored in the user profile 242 associated with the user. Additionally or alternatively, the optimized route(s) may be determined further based on the vehicle profile 244 associated with the vehicle.

The one or more optimized routes are output to the user in step 524. For example, the analysis unit 230 may output the one or more optimized routes to a network 130 for transmittal to the remote device 120 associated with the user and identified in the user profile 242.

The process 500 is performed by the analysis unit 230. In some embodiments, the analysis unit 230 may include separate hardware devices and/or software module, each configured to perform some of the functions in the process 400. For example, the analysis unit 230 may include a GIS 232 that determines potential routes in step 512, a traffic analysis unit that calculates attributes of each potential route in step 518, and an optimized route analysis unit that determines one or more optimized routes in step 524. In other embodiments, the analysis unit 230 may include a single hardware device and/or software module may perform more than one of the functions described above.

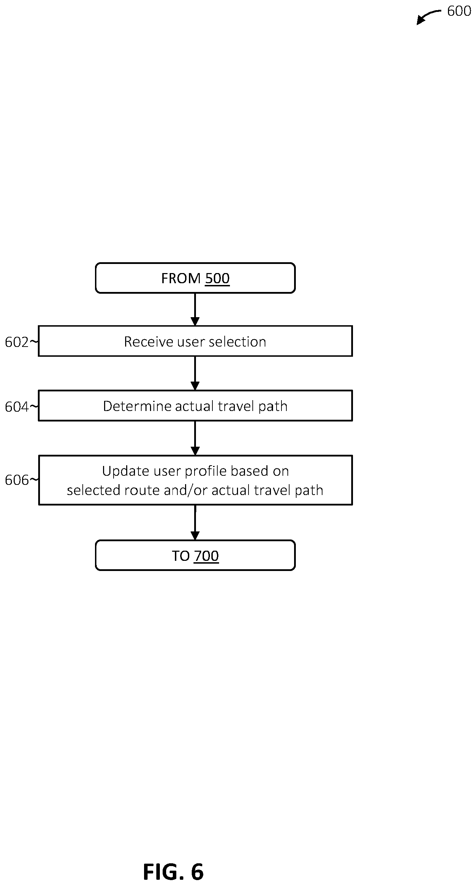

FIG. 6 is a flowchart illustrating a process 600 for updating a user profile 242 according to an exemplary embodiment of the present invention.

If more than one route is output to the user in step 524, a user selection of one of the routes may be received in step 602.

The actual travel path of the user 604 may be determined based on the real-time locations of the remote device 120 associated with the user in step 604.

In step 606, the user profile 606 is updated based on the attributes of the route selected by the user in step 602 and/or the actual route traveled by the user as determined in step 604.

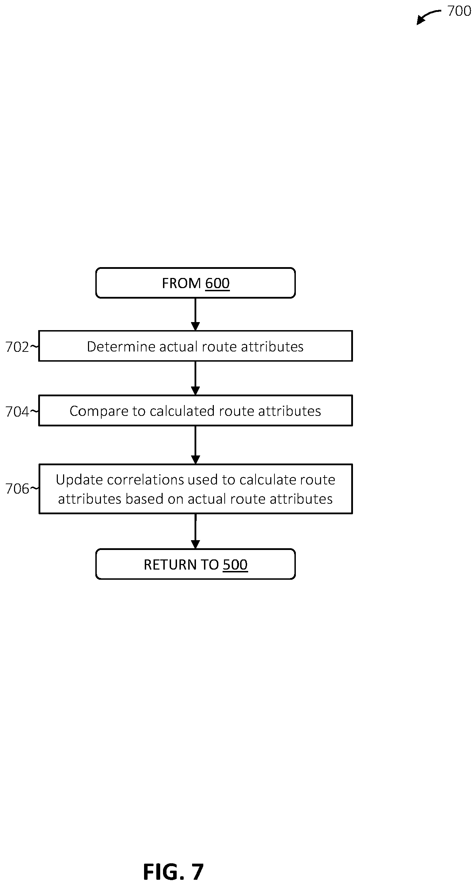

FIG. 7 is a flowchart illustrating a process 700 for updating correlations used to calculate route attributes according to an exemplary embodiment of the present invention.

As described above, some of the attributes of each potential route that are calculated in step 518 *(e.g.,* congestion c, safety s, estimated travel time *t,* etc.) may be stored as predicted traffic conditions 276 in step 520. The actual attributes of those routes (e.g., congestion c, safety s, estimated travel time t, etc.) during those times are determined in step 702.

In step 704, the actual attributes of those routes are compared to the attributes calculated in step 518 and stored in step 520.

In step 706, the correlations used to calculate the route attributes in step 518 are updated based on the actual attributes of those routes as determined in step 702.

While preferred embodiments have been set forth above, those skilled in the art who have reviewed the present disclosure will readily appreciate that other embodiments can be realized within the scope of the invention. Disclosures of specific numbers of hardware components, software modules and the like are illustrative rather than limiting. For example, five databases (a user profile database 240, a roadway database 250, a device location database 260, a traffic condition database 270, a road condition database 280, and a weather condition database 290) are described in detail above with a description of information that may be included in each of those databases. As one of ordinary skill in the art would recognize, the information described above may be stored in any manner, so long as the information is accessible to the one or more one or more servers 140. In other words, information described above as being included in one database may be stored in a different database, all of the information described above may be stored in a single database, etc. Accordingly, the present invention should be construed as limited only by the appended claims.

**Claims**

1.  An interactive telematics system (200), comprising:

    a database (240) that stores a plurality of user profiles (242), each of the user profiles including user preferences of a user, the user preferences including relative weights for each of a plurality of route attributes;
    a roadway database (250) that stores information including a dataset of current roadways;
    a traffic database (270) that stores information regarding past collisions on the dataset of current roadways;
    a weather condition database (290) that stores past weather conditions (292) and forecasted weather conditions (296); and
    an analysis unit (230) that:

    identifies (502) a user;
    identifies the user associated user profile;
    identifies (512) a plurality of potential routes from a departure location to a destination for a future time period, based on the information stored in the roadway database;
    calculates (518) attributes of each of the potential routes, the attributes of each of the potential routes including the safety of each of the potential routes, the safety of each of the potential routes being calculated at least in part based on past collisions along each of the potential routes, the past weather conditions at the time of the past collisions, and the forecasted weather conditions for the future time period;
    compares the attributes of each of the potential routes to the user preferences of the user by weighing each of the attributes of each of the potential routes based on the relative weights for each of the plurality of route attributes included in the user preferences of the user;
    identifies (522) one or more optimized routes for the user by selecting one or more of the potential routes based on the weights of each of the potential routes; and
    outputs (524) the one or more optimized routes to a communications network for transmittal to a remote device associated with the user.

2.  The system of Claim 1, wherein the relative weights for each of a plurality of attributes stored in the user profiles are determined based on the attributes of routes selected by the user or the attributes of routes traveled by the user.

3.  The system of Claim 1, further comprising:

    a road condition database (280) that stores dynamic road conditions;
    wherein the analysis unit calculates the safety of each of the potential routes at least in part based on the dynamic road conditions.

4.  The system of Claim 3, wherein the analysis unit determines the dynamic road conditions based on sensor data from environmental sensors measuring road surface conditions.

5.  The system of Claim 1, wherein at least one of the relative weights for each of the plurality of route attributes included in the user preferences represents how much the user weighs safety versus travel time and/or route length.

6.  The system of Claim 1, wherein the database (240) stores attributes (244) of a vehicle associated with the user and the analysis unit identifies the optimum routes further based on attributes of the vehicle associated with the user.

7.  The system of Claim 1, wherein the analysis unit provides functionality for the user to select (602) one of the one or more optimized routes and updates (606) the user preferences based on one or more attributes of the selected route.

8.  A method for identifying one or more optimum routes for a user, the method comprising:

    storing a plurality of user profiles, each of the user profiles including user preferences of a user, the user preferences including relative weights for each of a plurality of route attributes
    storing information including a dataset of current roadways;
    storing information regarding past collisions on the dataset of the current roadways;
    storing past weather conditions and forecasted weather conditions;
    identifying a user;

identifying the user associated user profile;

identifying a plurality of potential routes from a departure location to a destination for a future time period, based on the information including the dataset of current roadways;

calculating attributes of each of the potential routes, the attributes of each of the potential routes including the safety of each of the potential routes, the safety of each of the potential routes being calculated at least in part based on past collisions along each of the potential routes,

the past weather conditions at the time of the past collisions, and the forecasted weather conditions for the future time period;

comparing the attributes of each of the potential routes to the user preferences of the user by weighing each of the attributes of each of the potential routes based on the relative weights for each of the plurality of route attributes included in the user preferences of the user;

identifying one or more optimized routes for the user by selecting one or more of the potential routes based on the weights of each of the potential routes; and

outputting the one or more optimized routes to a communications network for transmittal to a remote device associated with the user.

9. The method of Claim 8, wherein the relative weights for each of a plurality of attributes stored in the user profiles are determined based on the attributes of routes selected by the user or the attributes of routes traveled by the user.

10. The method of Claim 8, wherein the safety of each of the potential routes is calculated at least in part based on dynamic road conditions.

11. The method of Claim 10, further comprising:
determining the dynamic road conditions based on sensor data from environmental sensors measuring road surface conditions.

12. The method of Claim 8, wherein at least one of the relative weights for each of a plurality of attributes of routes included in the user preferences represents how much the user weighs safety versus travel time and/or route length.

13. The method of Claim 8, wherein the one or more optimum routes are identified further based on attributes of a vehicle associated with the user.

14. The method of Claim 8, further comprising:

providing functionality for the user to select one of the one or more optimized routes; and
updating the user preferences based on the attributes of the selected route.

15. A non-transitory computer readable storage medium (CRSM) storing instructions that, when executed by a processor, cause a computer to:

store a plurality of user profiles, each of the user profiles including user preferences of a user, the user preferences including relative weights for each of a plurality of attributes of routes;
store information including a dataset of current roadways;
store information regarding past collisions on the dataset of the current roadways;
store past weather conditions and forecasted weather conditions;
identify a user;
identify the user associated user profile;
identify a plurality of potential routes from a departure location to a destination for a future time period, based on the information including the dataset of current roadways;
calculate attributes of each of the potential routes, the attributes of each of the potential routes including the safety of each of the potential routes, the safety of each of the potential routes being calculated at least in part based on past collisions along each of the potential routes, the past weather conditions at the time of the past collisions, and the forecasted weather conditions for the future time period;
compare the attributes of each of the potential routes to the user preferences of the user by weighing each of the attributes of each of the potential routes based on the relative weights for each of the plurality of route attributes included in the user preferences of the user;
identify one or more optimized routes for the user by selecting one or more of the potential routes based on the weights of each of the potential routes; and

output the one or more optimized routes to a communications network for transmittal to a remote device associated with the user.

16. The CRSM of Claim 15, wherein the relative weights for each of a plurality of attributes stored in the user profiles are determined based on the attributes of routes selected by the user or the attributes of routes traveled by the user.

17. The CRSM of Claim 15, wherein the safety of each of the potential routes are calculated at least in part based on dynamic road conditions based on sensor data from environmental sensors measuring road surface conditions.

18. The CRSM of Claim 15, wherein at least one of the relative weights for each of a plurality of attributes of routes included in the user preferences represents how much the user weighs safety versus travel time or route length.

19. The CRSM of Claim 15, wherein the one or more optimum routes are identified further based on attributes of a vehicle associated with the user.

20. The CRSM of Claim 15, wherein the instructions further cause the computer to:

provide functionality for the user to select one of the one or more optimized routes; and
update the user preferences based on the attributes of the selected route.

**Patentansprüche**

1. Interaktives Telematiksystem (200), umfassend:

eine Datenbank (240), die eine Vielzahl von Benutzerprofilen (242) speichert, wobei jedes der Benutzerprofile Benutzerpräferenzen eines Benutzers enthält, wobei die Benutzerpräferenzen relative Gewichtungen für jedes einer Vielzahl von Routenattributen enthalten;
eine Straßendatenbank (250), die Informationen speichert, die einen Datensatz aktueller Straßen enthalten;
eine Verkehrsdatenbank (270), die Informationen bezüglich vergangener Kollisionen auf dem Datensatz aktueller Straßen speichert;
eine Wetterbedingungsdatenbank (290), die vergangene Wetterbedingungen (292) und vorhergesagte Wetterbedingungen (296) speichert; und
eine Analyseeinheit (230), die:

einen Benutzer identifiziert (502);
das mit dem Benutzer assoziierte Benutzerprofil identifiziert;
eine Vielzahl potenzieller Routen von einem Abfahrtsort zu einem Zielort für einen zukünftigen Zeitraum basierend auf den Informationen, die in der Straßendatenbank gespeichert sind, identifiziert (512);
Attribute jeder der potenziellen Routen berechnet (518), wobei die Attribute jeder der potenziellen Routen die Sicherheit jeder der potenziellen Routen beinhalten, wobei die Sicherheit jeder der potenziellen Routen zumindest teilweise basierend auf vergangenen Kollisionen entlang jeder der potenziellen Routen, der vergangenen Wetterbedingungen zum Zeitpunkt der vergangenen Kollisionen und der vorhergesagten Wetterbedingungen für den zukünftigen Zeitraum berechnet wird;
die Attribute jeder der potenziellen Routen mit den Benutzerpräferenzen des Benutzers durch Gewichten jedes der Attribute jeder der potenziellen Routen basierend auf den relativen Gewichtungen für jedes der Vielzahl von Routenattributen, die in den Benutzerpräferenzen des Benutzers enthalten sind, vergleicht;
eine oder mehrere optimierte Routen für den Benutzer durch Auswählen einer oder mehrerer der potenziellen Routen basierend auf den Gewichtungen jeder der potenziellen Routen identifiziert (522); und
die eine oder die mehreren optimierten Routen an ein Kommunikationsnetzwerk zur Übertragung zu einer mit dem Benutzer assoziierten entfernten Vorrichtung ausgibt (524).

2. System nach Anspruch 1, wobei die relativen Gewichtungen für jedes einer Vielzahl von Attributen, die in den Benutzerprofilen gespeichert sind, basierend auf den Attributen der vom Benutzer ausgewählten Routen oder den Attributen der vom Benutzer befahrenen Routen bestimmt werden.

3. System nach Anspruch 1, ferner umfassend:

eine Straßenbedingungsdatenbank (280), die dynamische Straßenbedingungen speichert;
wobei die Analyseeinheit die Sicherheit jeder der potenziellen Routen zumindest teilweise basierend auf den dynamischen Straßenbedingungen berechnet.

4.  System nach Anspruch 3, wobei die Analyseeinheit die dynamischen Straßenbedingungen basierend auf Sensordaten von Umgebungssensoren bestimmt, die Straßenoberflächenbedingungen messen.

5.  System nach Anspruch 1, wobei mindestens eine der relativen Gewichtungen für jedes der Vielzahl von Routenattributen, die in den Benutzerpräferenzen enthalten sind, repräsentiert, wie stark der Benutzer Sicherheit gegenüber Fahrtzeit und/oder Routenlänge gewichtet.

6.  System nach Anspruch 1, wobei die Datenbank (240) Attribute (244) eines mit dem Benutzer assoziierten Fahrzeugs speichert und die Analyseeinheit die optimalen Routen ferner basierend auf Attributen des mit dem Benutzer assoziierten Fahrzeugs identifiziert.

7.  System nach Anspruch 1, wobei die Analyseeinheit eine Funktionalität für den Benutzer zum Auswählen (602) einer der einen oder der mehreren optimierten Routen bereitstellt und die Benutzerpräferenzen basierend auf einem oder mehreren Attributen der ausgewählten Route aktualisiert (606).

8.  Verfahren zum Identifizieren einer oder mehrerer optimaler Routen für einen Benutzer, wobei das Verfahren umfasst:

Speichern einer Vielzahl von Benutzerprofilen, wobei jedes der Benutzerprofile Benutzerpräferenzen eines Benutzers enthält, wobei die Benutzerpräferenzen relative Gewichtungen für jedes einer Vielzahl von Routenattributen enthalten;
Speichern von Informationen, die einen Datensatz aktueller Straßen enthalten;
Speichern von Informationen bezüglich vergangener Kollisionen auf dem Datensatz der aktuellen Straßen;
Speichern vergangener Wetterbedingungen und vorhergesagter Wetterbedingungen;
;
Identifizieren eines Benutzers;
Identifizieren des mit dem Benutzer assoziierten Benutzerprofils;
Identifizieren einer Vielzahl potenzieller Routen von einem Abfahrtsort zu einem Zielort für einen zukünftigen Zeitraum basierend auf den Informationen, die den Datensatz aktueller Straßen enthalten;
Berechnen von Attributen jeder der potenziellen Routen, wobei die Attribute jeder der potenziellen Routen die Sicherheit jeder der potenziellen Routen beinhalten, wobei die Sicherheit jeder der potenziellen Routen zumindest teilweise basierend auf vergangenen Kollisionen entlang jeder der potenziellen Routen, der vergangenen Wetterbedingungen zum Zeitpunkt der vergangenen Kollisionen und der vorhergesagten Wetterbedingungen für den zukünftigen Zeitraum berechnet wird;
Vergleichen der Attribute jeder der potenziellen Routen mit den Benutzerpräferenzen des Benutzers durch Gewichten jedes der Attribute jeder der potenziellen Routen basierend auf den relativen Gewichtungen für jedes der Vielzahl von Routenattributen, die in den Benutzerpräferenzen des Benutzers enthalten sind;
Identifizieren einer oder mehrerer optimierter Routen für den Benutzer durch Auswählen einer oder mehrerer der potenziellen Routen basierend auf den Gewichtungen jeder der potenziellen Routen; und
Ausgeben der einen oder der mehreren optimierten Routen an ein Kommunikationsnetzwerk zur Übertragung zu einer mit dem Benutzer assoziierten entfernten Vorrichtung.

9.  Verfahren nach Anspruch 8, wobei die relativen Gewichtungen für jedes einer Vielzahl von Attributen, die in den Benutzerprofilen gespeichert sind, basierend auf den Attributen der vom Benutzer ausgewählten Routen oder den Attributen der vom Benutzer befahrenen Routen bestimmt werden.

10. Verfahren nach Anspruch 8, wobei die Sicherheit jeder der potenziellen Routen zumindest teilweise basierend auf dynamischen Straßenbedingungen berechnet wird.

11. Verfahren nach Anspruch 10, ferner umfassend:
Bestimmen der dynamischen Straßenbedingungen basierend auf Sensordaten von Umgebungssensoren, die Straßenoberflächenbedingungen messen.

12. Verfahren nach Anspruch 8, wobei mindestens eine der relativen Gewichtungen für jedes einer Vielzahl von Routenattributen, die in den Benutzerpräferenzen enthalten sind, repräsentiert, wie stark der Benutzer Sicherheit gegenüber Fahrtzeit und/oder Routenlänge gewichtet.

13. Verfahren nach Anspruch 8, wobei die eine oder die mehreren optimalen Routen ferner basierend auf Attributen eines mit dem Benutzer assoziierten Fahrzeugs identifiziert werden.

14. Verfahren nach Anspruch 8, ferner umfassend:

Bereitstellen einer Funktionalität für den Benutzer zum Auswählen einer der einen oder der mehreren optimierten Routen; und
Aktualisieren der Benutzerpräferenzen basierend auf den Attributen der ausgewählten Route.

15. Nichtflüchtiges computerlesbares Speichermedium (CRSM), das Anweisungen speichert, die bei Ausführung durch einen Prozessor einen Computer zu Folgendem veranlassen:

Speichern einer Vielzahl von Benutzerprofilen, wobei jedes der Benutzerprofile Benutzerpräferenzen eines Benutzers enthält, wobei die Benutzerpräferenzen relative Gewichtungen für jedes einer Vielzahl von Routenattributen enthalten;
Speichern von Informationen, die einen Datensatz aktueller Straßen enthalten;
Speichern von Informationen bezüglich vergangener Kollisionen auf dem Datensatz der aktuellen Straßen;
Speichern vergangener Wetterbedingungen und vorhergesagter Wetterbedingungen;
Identifizieren eines Benutzers;
Identifizieren des mit dem Benutzer assoziierten Benutzerprofils;
Identifizieren einer Vielzahl potenzieller Routen von einem Abfahrtsort zu einem Zielort für einen zukünftigen Zeitraum basierend auf den Informationen, die den Datensatz aktueller Straßen enthalten;
Berechnen von Attributen jeder der potenziellen Routen, wobei die Attribute jeder der potenziellen Routen die Sicherheit jeder der potenziellen Routen beinhalten, wobei die Sicherheit jeder der potenziellen Routen zumindest teilweise basierend auf vergangenen Kollisionen entlang jeder der potenziellen Routen, der vergangenen Wetterbedingungen zum Zeitpunkt der vergangenen Kollisionen und der vorhergesagten Wetterbedingungen für den zukünftigen Zeitraum berechnet wird;
Vergleichen der Attribute jeder der potenziellen Routen mit den Benutzerpräferenzen des Benutzers durch Gewichten jedes der Attribute jeder der potenziellen Routen basierend auf den relativen Gewichtungen für jedes der Vielzahl von Routenattributen, die in den Benutzerpräferenzen des Benutzers enthalten sind;
Identifizieren einer oder mehrerer optimierter Routen für den Benutzer durch Auswählen einer oder mehrerer der potenziellen Routen basierend auf den Gewichtungen jeder der potenziellen Routen; und
Ausgeben der einen oder der mehreren optimierten Routen an ein Kommunikationsnetzwerk zur Übertragung zu einer mit dem Benutzer assoziierten entfernten Vorrichtung.

16. CRSM nach Anspruch 15, wobei die relativen Gewichtungen für jedes einer Vielzahl von Attributen, die in den Benutzerprofilen gespeichert sind, basierend auf den Attributen der vom Benutzer ausgewählten Routen oder den Attributen der vom Benutzer befahrenen Routen bestimmt werden.

17. CRSM nach Anspruch 15, wobei die Sicherheit jeder der potenziellen Routen zumindest teilweise basierend auf dynamischen Straßenbedingungen basierend auf Sensordaten von Umgebungssensoren, die Straßenoberflächenbedingungen messen, berechnet wird.

18. CRSM nach Anspruch 15, wobei mindestens eine der relativen Gewichtungen für jedes einer Vielzahl von Routenattributen, die in den Benutzerpräferenzen enthalten sind, repräsentiert, wie stark der Benutzer Sicherheit gegenüber Fahrtzeit oder Routenlänge gewichtet.

19. CRSM nach Anspruch 15, wobei die eine oder die mehreren optimalen Routen ferner basierend auf Attributen eines mit dem Benutzer assoziierten Fahrzeugs identifiziert werden.

20. CRSM nach Anspruch 15, wobei die Anweisungen den Computer ferner zu Folgendem veranlassen:

Bereitstellen einer Funktionalität für den Benutzer zum Auswählen einer der einen oder der mehreren optimierten Routen; und
Aktualisieren der Benutzerpräferenzen basierend auf den Attributen der ausgewählten Route.

**Revendications**

1. Système télématique interactif (200), comprenant :

   une base de données (240) qui stocke une pluralité de profils utilisateur (242), chacun des profils utilisateur comportant des préférences utilisateur d'un utilisateur, les préférences utilisateur comportant des importances relatives pour chacun d'une pluralité d'attributs d'itinéraire ;
   une base de données de routes (250) qui stocke des informations comportant un ensemble de données de routes actuelles ;
   une base de données de trafic (270) qui stocke des informations concernant des collisions passées sur l'ensemble de données de routes actuelles ;
   une base de données de conditions météorologiques (290) qui stocke des conditions météorologiques passées (292) et des conditions météorologiques prévues (296) ; et
   une unité d'analyse (230) qui :

   identifie (502) un utilisateur ;
   identifie le profil utilisateur associé à l'utilisateur ;
   identifie (512) une pluralité d'itinéraires potentiels depuis un emplacement de départ vers une destination pour une période de temps future, sur la base des informations stockées dans la base de données de routes ;
   calcule (518) des attributs de chacun des itinéraires potentiels, les attributs de chacun des itinéraires potentiels comportant la sécurité de chacun des itinéraires potentiels, la sécurité de chacun des itinéraires potentiels étant calculée au moins en partie sur la base de collisions passées le long de chacun des itinéraires potentiels, des conditions météorologiques passées au moment des collisions passées et des conditions météorologiques prévues pour la période de temps future ;
   compare les attributs de chacun des itinéraires potentiels aux préférences utilisateur de l'utilisateur en mesurant l'importance de chacun des attributs de chacun des itinéraires potentiels sur la base des importances relatives pour chacun de la pluralité d'attributs d'itinéraire inclus dans les préférences utilisateur de l'utilisateur ;
   identifie (522) un ou plusieurs itinéraires optimisés pour l'utilisateur en sélectionnant un ou plusieurs des itinéraires potentiels sur la base des importances de chacun des itinéraires potentiels ; et
   délivre (524) les un ou plusieurs itinéraires optimisés à un réseau de communication pour une transmission à un dispositif à distance associé à l'utilisateur.

2. Système selon la revendication 1, dans lequel les importances relatives pour chacun d'une pluralité d'attributs stockés dans les profils utilisateur sont déterminées sur la base des attributs d'itinéraires sélectionnés par l'utilisateur ou des attributs d'itinéraires parcourus par l'utilisateur.

3. Système selon la revendication 1, comprenant en outre :

   une base de données de conditions routières (280) qui stocke des conditions routières dynamiques ;
   dans lequel l'unité d'analyse calcule la sécurité de chacun des itinéraires potentiels au moins en partie sur la base des conditions routières dynamiques.

4. Système selon la revendication 3, dans lequel l'unité d'analyse détermine les conditions routières dynamiques sur la base de données de capteur provenant de capteurs environnementaux mesurant des conditions de surface de la route.

5. Système selon la revendication 1, dans lequel au moins l'une des importances relatives pour chacun de la pluralité d'attributs d'itinéraire inclus dans les préférences utilisateur représente l'importance que l'utilisateur accorde à la sécurité par rapport au temps de trajet et/ou à la longueur de l'itinéraire.

6. Système selon la revendication 1, dans lequel la base de données (240) stocke des attributs (244) d'un véhicule associé à l'utilisateur et l'unité d'analyse identifie les itinéraires optimaux en outre sur la base d'attributs du véhicule associé à l'utilisateur.

7. Système selon la revendication 1, dans lequel l'unité d'analyse fournit une fonctionnalité permettant à l'utilisateur de sélectionner (602) l'un des un ou plusieurs itinéraires optimisés et met à jour (606) les préférences utilisateur sur la base d'un ou de plusieurs attributs de l'itinéraire sélectionné.

**8.** Procédé d'identification d'un ou de plusieurs itinéraires optimaux pour un utilisateur, le procédé comprenant :

le stockage d'une pluralité de profils utilisateur, chacun des profils utilisateur comportant des préférences utilisateur d'un utilisateur, les préférences utilisateur comportant des importances relatives pour chacun d'une pluralité d'attributs d'itinéraire
le stockage d'informations comportant un ensemble de données de routes actuelles ;
le stockage d'informations concernant des collisions passées sur l'ensemble de données des routes actuelles ;
le stockage de conditions météorologiques passées et de conditions météorologiques prévues ;
;
l'identification d'un utilisateur ;
l'identification du profil utilisateur associé à l'utilisateur ;
l'identification d'une pluralité d'itinéraires potentiels depuis un emplacement de départ vers une destination pour une période de temps future, sur la base des informations comportant l'ensemble de données de routes actuelles ;
le calcul d'attributs de chacun des itinéraires potentiels, les attributs de chacun des itinéraires potentiels comportant la sécurité de chacun des itinéraires potentiels, la sécurité de chacun des itinéraires potentiels étant calculée au moins en partie sur la base de collisions passées le long de chacun des itinéraires potentiels, des conditions météorologiques passées au moment des collisions passées et des conditions météorologiques prévues pour la période de temps future ;
la comparaison des attributs de chacun des itinéraires potentiels aux préférences utilisateur de l'utilisateur en mesurant l'importance de chacun des attributs de chacun des itinéraires potentiels sur la base des importances relatives pour chacun de la pluralité d'attributs d'itinéraire inclus dans les préférences utilisateur de l'utilisateur ;
l'identification d'un ou de plusieurs itinéraires optimisés pour l'utilisateur en sélectionnant un ou plusieurs des itinéraires potentiels sur la base des importances de chacun des itinéraires potentiels ; et
la délivrance des un ou plusieurs itinéraires optimisés à un réseau de communication pour une transmission à un dispositif à distance associé à l'utilisateur.

**9.** Procédé selon la revendication 8, dans lequel les importances relatives pour chacun d'une pluralité d'attributs stockés dans les profils utilisateur sont déterminées sur la base des attributs d'itinéraires sélectionnés par l'utilisateur ou des attributs d'itinéraires parcourus par l'utilisateur.

**10.** Procédé selon la revendication 8, dans lequel la sécurité de chacun des itinéraires potentiels est calculée au moins en partie sur la base de conditions routières dynamiques.

**11.** Procédé selon la revendication 10, comprenant en outre :
la détermination des conditions routières dynamiques sur la base de données de capteur provenant de capteurs environnementaux mesurant des conditions de surface de la route.

**12.** Procédé selon la revendication 8, dans lequel au moins l'une des importances relatives pour chacun d'une pluralité d'attributs d'itinéraires inclus dans les préférences utilisateur représente l'importance que l'utilisateur accorde à la sécurité par rapport au temps de trajet et/ou à la longueur de l'itinéraire.

**13.** Procédé selon la revendication 8, dans lequel les un ou plusieurs itinéraires optimaux sont en outre identifiés sur la base d'attributs d'un véhicule associé à l'utilisateur.

**14.** Procédé selon la revendication 8, comprenant en outre :

la fourniture d'une fonctionnalité permettant à l'utilisateur de sélectionner l'un des un ou plusieurs itinéraires optimisés ; et
la mise à jour des préférences utilisateur sur la base des attributs de l'itinéraire sélectionné.

**15.** Support de stockage non transitoire lisible par ordinateur (CRSM) stockant des instructions qui, lorsqu'elles sont exécutées par un processeur, amènent l'ordinateur à :

stocker une pluralité de profils utilisateur, chacun des profils utilisateur comportant des préférences utilisateur d'un utilisateur, les préférences utilisateur comportant des importances relatives pour chacun d'une pluralité d'attributs d'itinéraire ;
stocker des informations comportant un ensemble de données de routes actuelles ;

stocker des informations concernant des collisions passées sur l'ensemble de données des routes actuelles ;

stocker des conditions météorologiques passées et des conditions météorologiques prévues ;

identifier un utilisateur ;

identifier le profil utilisateur associé à l'utilisateur ;

identifier une pluralité d'itinéraires potentiels depuis un emplacement de départ vers une destination pour une période de temps future, sur la base des informations comportant l'ensemble de données de routes actuelles ;

calculer des attributs de chacun des itinéraires potentiels, les attributs de chacun des itinéraires potentiels comportant la sécurité de chacun des itinéraires potentiels, la sécurité de chacun des itinéraires potentiels étant calculée au moins en partie sur la base de collisions passées le long de chacun des itinéraires potentiels, des conditions météorologiques passées au moment des collisions passées et des conditions météorologiques prévues pour la période de temps future ;

comparer les attributs de chacun des itinéraires potentiels aux préférences utilisateur de l'utilisateur en mesurant l'importance de chacun des attributs de chacun des itinéraires potentiels sur la base des importances relatives pour chacun de la pluralité d'attributs d'itinéraire inclus dans les préférences utilisateur de l'utilisateur ;

identifier un ou plusieurs itinéraires optimisés pour l'utilisateur en sélectionnant un ou plusieurs des itinéraires potentiels sur la base des importances de chacun des itinéraires potentiels ; et

délivrer les un ou plusieurs itinéraires optimisés à un réseau de communication pour une transmission à un dispositif à distance associé à l'utilisateur.

16. CRSM selon la revendication 15, dans lequel les importances relatives pour chacun d'une pluralité d'attributs stockés dans les profils utilisateur sont déterminées sur la base des attributs d'itinéraire sélectionnés par l'utilisateur ou des attributs d'itinéraire parcourus par l'utilisateur.

17. CRSM selon la revendication 15, dans lequel la sécurité de chacun des itinéraires potentiels est calculée au moins en partie sur la base de conditions routières dynamiques basées sur des données de capteur provenant de capteurs environnementaux mesurant des conditions de surface de la route.

18. CRSM selon la revendication 15, dans lequel au moins l'une des importances relatives pour chacun d'une pluralité d'attributs d'itinéraire inclus dans les préférences utilisateur représente l'importance que l'utilisateur accorde à la sécurité par rapport au temps de trajet ou à la longueur de l'itinéraire.

19. CRSM selon la revendication 15, dans lequel les un ou plusieurs itinéraires optimaux sont en outre identifiés sur la base d'attributs d'un véhicule associé à l'utilisateur.

20. CRSM selon la revendication 15, dans lequel les instructions amènent en outre l'ordinateur à :

fournir une fonctionnalité permettant à l'utilisateur de sélectionner l'un des un ou plusieurs itinéraires optimisés ; et

mettre à jour les préférences utilisateur sur la base des attributs de l'itinéraire sélectionné.

**100**

Traffic Data 170

Road Condition Data 180

Weather Data 190

NETWORK(S) ~130

~140

~150

Remote Device 120

Remote Device 120

Remote Device 120

**FIG. 1**

**200**

Roadway Database 250

Device Location Database 260

Analysis Unit 230

Traffic Condition Database 270

Past Traffic Conditions 272

Current Traffic Conditions 274

Predicted Traffic Conditions 276

User Profile Database 240

User Profiles 242

Vehicle Profiles 244

Road Condition Database 280

Static Road Conditions 282

Dynamic Road Conditions 284

Geographic Information System (GIS) 232

Weather Condition Database 290

Past Weather Conditions 292

Current Weather Conditions 294

Forecasted Weather Conditions 296

Remote Device 120

Remote Device 120

Remote Device 120

**FIG. 2**

**FIG. 3**

**FIG. 4**

500

START

502 — Identify user

504 — Identify vehicle

506 — Receive destination

508 — **Determine departure location**

510 — Determine departure time

512 — Determine potential routes

514 — Eliminate routes based on user profile

516 — **Eliminate routes based on vehicle profile**

518 — **Calculate attributes of each potential route**

520 — Store attributes of each potential route

522 — Determine optimized route(s)

524 — Output optimized route(s)

TO 600

**FIG. 5**

600

```
┌─────────────────────────┐
│       FROM 500          │
└─────────────────────────┘
            │
            ▼
┌─────────────────────────┐
│   Receive user selection │   602
└─────────────────────────┘
            │
            ▼
┌─────────────────────────┐
│  Determine actual travel path │   604
└─────────────────────────┘
            │
            ▼
┌─────────────────────────┐
│   Update user profile based on   │   606
│ selected route and/or actual travel path │
└─────────────────────────┘
            │
            ▼
┌─────────────────────────┐
│        TO 700           │
└─────────────────────────┘
```

**FIG. 6**

700

FROM 600

702 ~ Determine actual route attributes

704 ~ Compare to calculated route attributes

706 ~ Update correlations used to calculate route attributes based on actual route attributes

RETURN TO 500

**FIG. 7**

**EP 3 387 384 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62266420
- US 2009048775 A1
- US 2014358437 A1
- US 2013080055 A1